# EUROPEAN PATENT APPLICATION

(11) **EP 3 902 046 A1**
(43) Date of publication of application: **27.10.2021**
(21) Application number: 19898114.4
(22) Date of filing: 16.12.2019
(51) Int. Cl.: H01M 10/04, H01M 2/26

(54) **SECONDARY BATTERY AND MANUFACTURING METHOD THEREFOR**

(30) Priority: 19.12.2018 JP 2018236847
(71) Applicant: SANYO Electric Co., Ltd., Daito-shi Osaka 574-8534 (JP)
(72) Inventor: YAMADA Tomoyuki, Chuo-ku, Osaka-shi, Osaka 540-6207 (JP); IMACHI Naoki, Chuo-ku, Osaka-shi, Osaka 540-6207 (JP); IKEDA Daisuke, Chuo-ku, Osaka-shi, Osaka 540-6207 (JP); TAMURA Kazuaki, Chuo-ku, Osaka-shi, Osaka 540-6207 (JP)
(74) Representative: Vigand, Philippe
(86) International application number: PCT/JP2019/049116
(87) International publication number: WO 2020/129880

(57) **Abstract**

Provided is a secondary battery which can be produced with high efficiency. This secondary battery is provided with: a belt-like positive electrode plate (4) having a plurality of positive electrode tabs (40); a belt-like negative electrode plate (5) having a plurality of negative electrode tabs (50); a flat wound electrode body (3) obtained by winding the positive electrode plate (4) and the negative electrode plate (5) with a belt-like separator therebetween; and a positive electrode collector (second positive electrode collector (6b)) connected to the plurality of positive electrode tabs (40). The plurality of positive electrode tabs (40) in a state of being laminated are joined to the positive electrode collector (second positive electrode collector (6b)). Identification parts (80) are formed on some positive electrode tabs (40) of the plurality of positive electrode tabs (40).

## Description

### TECHNICAL FIELD

The present invention relates to a secondary battery and a manufacturing method therefor.

### BACKGROUND ART

In a power source for driving of an electric vehicle (EV), a hybrid electric vehicle (HEV, PHEV), or the like, secondary batteries such as an alkali secondary battery and a non-aqueous electrolyte secondary battery have been used.

In each of the secondary batteries, a bottomed cylindrical exterior member having an opening and a sealing plate that seals the opening constitute a battery case. An electrode assembly composed of a positive electrode plate, a negative electrode plate, and a separator, together with an electrolyte, is accommodated in the battery case. A positive electrode terminal and a negative electrode terminal are attached to the sealing plate. The positive electrode terminal is electrically connected to the positive electrode plate via a positive electrode current collector, and the negative electrode terminal is electrically connected to the negative electrode plate via a negative electrode current collector.

As the secondary battery, a secondary battery comprising a flat-shaped wound electrode assembly obtained by winding a strip-shaped positive electrode plate having a plurality positive electrode tabs and a strip-shaped negative electrode plate having a plurality of negative electrode tabs via a strip-shaped separator has been proposed (Patent Literature 1, described below).

### CITATION LIST

### PATENT LITERATURE

PATENT LITERATURE 1: Japanese Unexamined Patent Application Publication No. 2016-115409

### SUMMARY

In a secondary battery comprising a flat-shaped wound electrode assembly including an electrode plate having a plurality of tabs, spacings among the plurality of tabs provided in the electrode plate are not uniform, and the tabs are provided with different spacings. If a strip-shaped electrode plate having a plurality of tabs provided therein with different spacings is manufactured, a position of a portion as a winding-start end portion of the electrode plate in an electrode assembly may not be found because a malfunction occurs in the middle of a process for cutting an electrode original plate. In such a case, productivity decreases so that many waste losses of the electrode plate may occur in some cases.

It is an advantage of the present invention to provide a secondary battery having high productivity.

According to an aspect of the present invention, a secondary battery comprises:
a strip-shaped first electrode plate having a plurality of first electrode tabs,
a strip-shaped second electrode plate having a plurality of second electrode tabs,
a flat-shaped wound electrode assembly obtained by winding the first electrode plate and the second electrode plate via a strip-shaped separator, and
a current collector connected with the plurality of first electrode tabs in a laminated state,
in which an identification part is formed in each of some of the plurality of first electrode tabs.

The above-described configuration enables a winding-start end portion of the first electrode plate in the wound electrode assembly to be specified based on the identification part provided in the tab even when a position of a portion as the winding-start end portion of the first electrode plate in the wound electrode assembly is not found because a malfunction occurs in the middle of a process for cutting a first electrode original plate. Accordingly, productivity can be effectively prevented from decreasing.

In a longitudinal direction of the first electrode plate, the first electrode tab in which the identification part is formed is preferably arranged at a position closer to a winding-end end portion of the first electrode plate than to the winding-start end portion of the first electrode plate.

The identification part is preferably a notch, an opening, or a mark formed in the first electrode tab.

The identification part is preferably a notch or an opening formed in the first electrode tab, and
the thickness of the first electrode tab in an edge portion of the opening or the notch is preferably larger than the thickness of the first electrode tab on the side closer to a center of the first electrode tab than the edge portion of the first electrode tab.

The identification part is preferably formed in the first electrode tab positioned on an outermost surface in a direction in which the first electrode tabs are laminated among the plurality of laminated first electrode tabs.

The identification part is preferably formed in the first electrode tab arranged on an outermost surface of the plurality of laminated first electrode tabs in a direction in which the first electrode tabs are laminated and on the opposite side to the side of the current collector.

The secondary battery preferably has a bonding part in which the plurality of first electrode tabs and the current collector are bonded to each other,
in which the identification part is preferably formed on the side closer to a distal end of the first electrode tab than the bonding part in a direction in which the first electrode tab protrudes.

According to an aspect of the present invention, a method of manufacturing a secondary battery comprising:
a strip-shaped first electrode plate having a plurality of first electrode tabs;
a strip-shaped second electrode plate having a plurality of second electrode tabs,
a flat-shaped wound electrode assembly obtained by winding the first electrode plate and the second electrode plate via a strip-shaped separator, and
a current collector connected with the plurality of first electrode tabs in a laminated state, the method of manufacturing the secondary battery having
an original plate production step for producing a first electrode original plate having the plurality of first electrode tabs and forming an identification part in each of some of the plurality of first electrode tabs,
an electrode plate production step for cutting the first electrode original plate to produce the first electrode plate after the original plate production step, and
a connection step for laminating the plurality of first electrode tabs and connecting the laminated first electrode tabs to a current collector.

The above-described configuration enables a winding-start end portion of the first electrode plate in the wound electrode assembly to be specified based on the identification part provided in the tab even when a position of a portion as the winding-start end portion of the first electrode plate in the wound electrode assembly is not found because a malfunction occurs in the middle of a process for cutting the first electrode original plate. Accordingly, productivity can be effectively prevented from decreasing.

The identification part is preferably an opening or a notch formed in the first electrode tab,
the plurality of first electrode tabs and the current collector are bonded to each other by ultrasonic bonding to form a bonding part in the connection step, and
the identification part is arranged on the side closer to a distal end of the first electrode tab than the bonding part.

In the connection step, the plurality of first electrode tabs and the current collector are preferably sandwiched between an anvil and a horn to vibrate the horn in a width direction of the first electrode tab, to perform ultrasonic bonding.

According to the present invention, there can be provided a secondary battery having high productivity.

### BRIEF DESCRIPTION OF DRAWINGS

FIG. 1 is a perspective view of a secondary battery according to an embodiment.
FIG. 2 is a cross-sectional view along a line II - II illustrated in FIG. 1.
FIG. 3(a) is a plan view of a positive electrode original plate.
FIG. 3(b) is a plan view of a positive electrode original plate after tab formation.
FIG. 3(c) is a plan view of a final positive electrode original plate.
FIG. 3(d) is a plan view of a positive electrode plate.
FIG. 4(a) is a plan view of a negative electrode original plate.
FIG. 4(b) is a plan view of a negative electrode original plate after tab formation.
FIG. 4(c) is a plan view of a final negative electrode original plate.
FIG. 4(d) is a plan view of a negative electrode plate.
FIG. 5 is a plane view of a wound electrode assembly according to an embodiment.
FIG. 6 is a diagram illustrating a state where a positive electrode tab group is connected to a second positive electrode current collector and a negative electrode tab group is connected to a second negative electrode current collector.
FIG. 7 is a plan view in the vicinity of a bonding part between the positive electrode tab group and the second positive electrode current collector.
FIG. 8 is a cross-sectional view taken along a line VIII - VIII illustrated in FIG. 7.
FIG. 9 is a diagram illustrating a surface on the electrode assembly side of a sealing plate after the first positive electrode current collector and the first negative electrode current collector are attached to the sealing plate.
FIG. 10 is a diagram illustrating a surface on the electrode assembly side of the sealing plate after the second positive electrode current collector is attached to the first positive electrode current collector and the second negative electrode current collector is attached to the first negative electrode current collector.

### DESCRIPTION OF EMBODIMENTS

A configuration of a rectangular secondary battery 20 as a secondary battery according to an embodiment will be described below. The present invention is not limited to an embodiment described below.

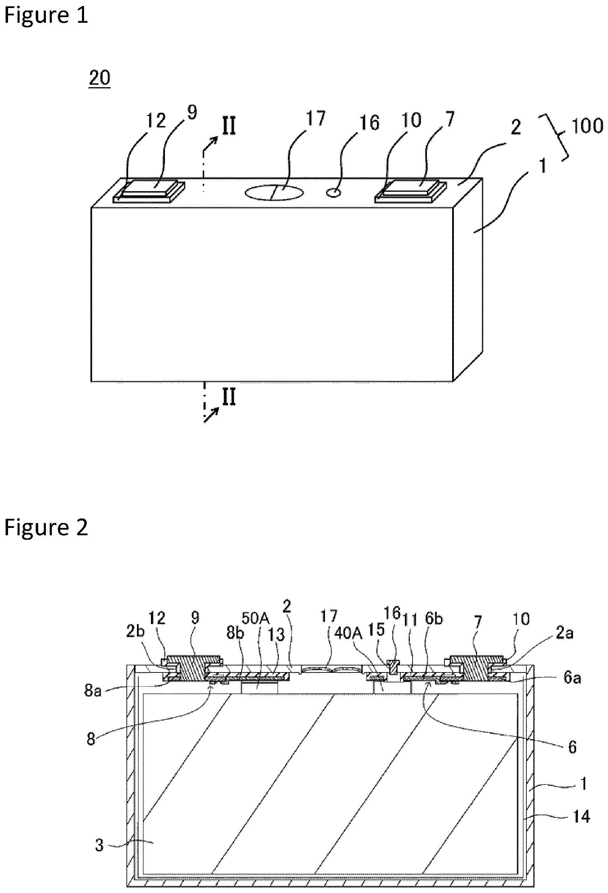

As illustrated in FIG. 1 and FIG. 2, the rectangular secondary battery 20 comprises a battery case 100 that is composed of a bottomed rectangular cylindrical-shaped rectangular exterior member 1 having an opening and a sealing plate 2 that seals the opening of the rectangular exterior member 1. Each of the rectangular exterior member 1 and the sealing plate 2 is preferably made of a metal. A wound electrode assembly 3 including a positive electrode plate and a negative electrode plate, together with an electrolyte, is accommodated in the rectangular exterior member 1.

A positive electrode tab group 40A composed of a plurality of positive electrode tabs 40 and a negative electrode tab group 50A composed of a plurality of negative electrode tabs 50 are provided in an end portion on the sealing plate 2 side of the wound electrode assembly 3. The positive electrode tab group 40A is electrically connected to a positive electrode terminal 7 via a second positive electrode current collector 6b and a first positive electrode current collector 6a. The negative electrode tab group 50A is electrically connected to a negative electrode terminal 9 via a second negative electrode current collector 8b and a first negative electrode current collector 8a.

The first positive electrode current collector 6a, the second positive electrode current collector 6b, and the positive electrode terminal 7 are each preferably made of a metal and more preferably made of aluminum or an aluminum alloy. An outer-side insulating member 10 made of resin is arranged between the positive electrode terminal 7 and the sealing plate 2. An inner-side insulating member 11 made of resin is arranged between the first positive electrode current collector 6a and the second positive electrode current collector 6b and the sealing plate 2.

The first negative electrode current collector 8a, the second negative electrode current collector 8b, and the negative electrode terminal 9 are each preferably made of a metal and more preferably made of copper or a copper alloy. The negative electrode terminal 9 preferably has a portion made of aluminum or an aluminum alloy and a portion made of copper or a copper alloy. In this case, the portion made of copper or a copper alloy is preferably connected to the first negative electrode current collector 8a, and the portion made of aluminum or an aluminum alloy preferably protrudes more outwardly than the sealing plate 2. An outer-side insulating member 12 made of resin is arranged between the negative electrode terminal 9 and the sealing plate 2. An inner-side insulating member 13 made of resin is arranged between the first negative electrode current collector 8a and the second negative electrode current collector 8b and the sealing plate 2.

An electrode assembly holder 14 composed of a resin sheet made of resin is arranged between the wound electrode assembly 3 and the rectangular exterior member 1. The electrode assembly holder 14 is preferably molded by bending the insulating sheet made of resin in a bag shape or a box shape. The sealing plate 2 is provided with an electrolyte injection hole 15, and the electrolyte injection hole 15 is sealed with a sealing member 16. The sealing plate 2 is provided with a gas discharge valve 17 that is broken when pressure in the battery case 100 reaches a predetermined value or more and discharges gas in the battery case 100 to outside the battery case 100.

Then, details of a method of manufacturing the rectangular secondary battery 20 and each component in the rectangular secondary battery 20 will be described.

### [Positive Electrode Plate]

First, a method of manufacturing a positive electrode plate will be described.

### [Production of Positive Electrode Active Material Mixture Layer Slurry]

A lithium-nickel-cobalt-manganese composite oxide as a positive electrode active material, polyvinylidene fluoride (PVdF) as a binder, a carbon material as a conductive agent, and N-methyl-2-pyrrolidone (NMP) as a dispersion medium are kneaded such that a mass ratio of the lithium-nickel-cobalt-manganese composite oxide, the PVdF, and the carbon material is 97.5 : 1 : 1.5, to produce a positive electrode active material mixture layer slurry.

### [Production of Positive Electrode Protective Layer Slurry]

Alumina powder, a carbon material as a conductive agent, polyvinylidene fluoride (PVdF) as a binder, and N-methyl-2-pyrrolidone (NMP) as a dispersion medium are kneaded such that a mass ratio of the alumina powder, the carbon material, and the PVdF is 83 : 3 : 14, to produce a protective layer slurry.

### [Formation of Positive Electrode Active Material Mixture Layer and Positive Electrode Protective Layer]

The positive electrode active material mixture layer slurry and the positive electrode protective layer slurry produced using the above-described method are applied to both surfaces of an aluminum foil having a thickness of 15 µm as a positive electrode current collector by a die coater. At this time, the positive electrode active material mixture layer slurry is applied to a center in a width direction of the positive electrode current collector. The positive electrode protective layer slurry is applied to both ends in a width direction of a region to which the positive electrode active material mixture layer slurry is applied.

The positive electrode current collector to which the positive electrode active material mixture layer slurry and the positive electrode protective layer slurry are applied is dried, to remove the NMP included in each of the positive electrode active material mixture layer slurry and the positive electrode protective layer slurry. As a result, the positive electrode active material mixture layer and the positive electrode protective layer are formed. Then, the positive electrode active material mixture layer is compressed by being passed between paired press rollers, to obtain a positive electrode original plate 400.

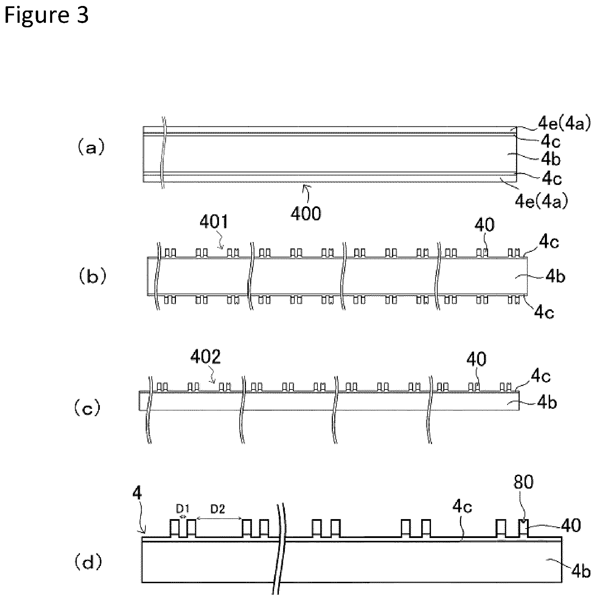

FIG. 3(a) is a plan view of the positive electrode original plate 400 produced using the above-described method. A positive electrode active material mixture layer 4b is formed in a longitudinal direction of a strip-shaped positive electrode current collector 4a on both surfaces of the positive electrode current collector 4a. In the positive electrode current collector 4a, a positive electrode protective layer 4c is formed in the vicinity of both ends in a width direction of a region where the positive electrode active material mixture layer 4b is formed. Positive electrode current collector exposure parts 4e are respectively formed in a longitudinal direction of the positive electrode original plate 400 in both end portions in a width direction of the positive electrode original plate 400. The thickness of the positive electrode active material mixture layer 4b is preferably larger than the thickness of the positive electrode protective layer 4c.

### [Formation of Tab]

FIG. 3(b) is a plan view of a positive electrode original plate 401 after tab formation. The positive electrode current collector exposure part 4e in the positive electrode original plate 400 is cut into a predetermined shape, to produce the positive electrode original plate 401 after tab formation. The positive electrode original plate 400 can be cut by irradiation of an energy ray such as a laser, a metal mold, a cutter, or the like. In the positive electrode original plate 401 after tab formation, a plurality of positive electrode tabs 40 are formed at both ends in a width direction of the positive electrode original plate 401 after tab formation. Each of the positive electrode tabs 40 is composed of the positive electrode current collector exposure part 4e. As illustrated in FIG. 3(b), the positive electrode original plate 400 can be cut such that the positive electrode protective layer 4c remains in an end portion of the positive electrode original plate 401 after tab formation formed at a root of each of the positive electrode tabs 40 and between the adjacent positive electrode tabs 40. The positive electrode protective layer 4c is not an essential component, and can also be omitted. A portion where the positive electrode active material mixture layer 4b is formed may be cut so that the positive electrode protective layer 4c does not remain in the end portion of the positive electrode original plate 401 after tab formation formed between the adjacent positive electrode tabs 40. The positive electrode original plate 400 is preferably cut by irradiation of an energy ray to form the positive electrode tabs 40.

In each of some of the plurality of positive electrode tabs 40, an identification part 80 is formed. In the rectangular secondary battery 20, the identification part 80 is a notch portion formed at an outer peripheral edge of the positive electrode tab 40. The identification part 80 is preferably provided when the positive electrode tab 40 is formed. After the positive electrode tab 40 is formed, the identification part 80 may be formed in the positive electrode tab 40.

FIG. 3(c) is a plan view of a final positive electrode original plate 402. In a longitudinal direction of the positive electrode original plate 401 after tab formation, the positive electrode original plate 401 after tab formation is cut in a central portion in the width direction. As a result, the final positive electrode original plate 402 the size in a width direction of which is the size of the positive electrode plate 4 is obtained. That is, the final positive electrode original plate 402 remains in the state before it is cut to have the length of the positive electrode plate 4 in its length direction.

FIG. 3(d) is a plan view of the positive electrode plate 4. The final positive electrode original plate 402 is cut to have a predetermined length, to obtain the positive electrode plate 4. At this time, the final positive electrode original plate 402 is preferably cut at a position at a predetermined distance from the identification part 80 formed in each of some of the positive electrode tabs 40 by using the identification part 80 as a base point.

To further improve productivity, the final positive electrode original plate 402 is preferably cut in a process for producing a wound electrode assembly, described below. That is, a portion as a winding-end end portion (a winding-start end portion in a subsequent positive electrode plate 4) is preferably cut while or after the wound electrode assembly is wound.

It is considered that a part of the final positive electrode original plate 402 is removed due to a partial defect or the like. In the case, when a portion as a winding-start end portion of the positive electrode plate 4 (a cut portion of the final positive electrode original plate 402) is specified after a part of the final positive electrode original plate 402 is removed, the identification part 80 provided in the positive electrode tab 40 is read so that the portion as the winding-start end portion of the positive electrode plate 4 can be specified, which can effectively prevent productivity from decreasing.

To obtain a higher output secondary battery, in the wound electrode assembly 3, the positive electrode tab 40 is preferably provided for each layer of the positive electrode plate 4. That is, the number of positive electrode plate 4 to be laminated and the number of positive electrode tab 40 to be laminated are preferably the same or substantially the same. Therefore, as illustrated in FIG. 3(d), in the positive electrode plate 4, there exist a portion where the positive electrode tabs 40 are arranged at a short distance (Dl) to each other and a portion where the positive electrode tabs 40 are arranged at a long distance (D2) to each other. In the wound electrode assembly 3, a winding diameter of the positive electrode plate 4 increases outward from a winding center. Therefore, when the positive electrode tabs 40 are laminated, the distance D1 and the distance D2 are preferably set to gradually increase from the winding-start end portion to the winding-end end portion of the positive electrode plate 4 such that respective positions of the positive electrode tabs 40 are aligned with one another. The same applies to the negative electrode tabs 50, described below.

A distance from the position of the positive electrode tab 40 provided with the identification part 80 to the winding-end end portion (cut portion) of the positive electrode plate 4 is preferably shorter. If a distance to the winding-end end portion (cut portion) of the positive electrode plate 4 after the identification part 80 is read is large, the winding-end end portion (cut portion) of the positive electrode plate 4 is specified based on the number of positive electrode tabs 40 arranged from the positive electrode tab 40 where the identification part 80 is formed to the winding-end end portion (cut portion) of the positive electrode plate 4 and a distance therebetween. When the final positive electrode original plate 402 is cut, the accuracy of the length of the positive electrode plate 4 is difficult to ensure.

Therefore, in a longitudinal direction of the positive electrode plate 4, the positive electrode tab 40 where the identification part 80 is formed is preferably arranged at a position closer to the winding-end end portion of the positive electrode plate 4 than to the winding-start end portion of the positive electrode plate 4.

The positive electrode tab 40 at a position that is the closest to the winding-end end portion of the positive electrode plate 4 is more preferably provided with the identification part 80.

Alternatively, at least one of the positive electrode tab 40 at the position that is the closest to the winding-end end portion of the positive electrode plate 4 and the positive electrode tab 40 at a position that is the second closest to the winding-end end portion of the positive electrode plate 4 is more preferably provided with the identification part 80.

Each of the positive electrode tab 40 at the position that is the closest to the winding-end end portion of the positive electrode plate 4 and the positive electrode tab 40 at the position that is the second closest to the winding-end end portion of the positive electrode plate 4 may be provided with the identification part 80.

The same applies to an identification part 81 provided in the negative electrode tab 50, described below.

The one positive electrode plate 4 has a plurality of positive electrode tabs 40. Only some of the plurality of positive electrode tabs 40 are each provided with the identification part 80. That is, all the positive electrode tabs 40 are not each provided with the identification part 80.

### [Negative Electrode Plate]

Then, a method of manufacturing a negative electrode plate will be described.

### [Production of Negative Electrode Active Material Mixture Layer Slurry]

Graphite as a negative electrode active material, styrene-butadiene rubber (SBR) and carboxymethyl cellulose (CMC) as a binder, and water as a dispersion medium are kneaded such that a mass ratio of the graphite, the SBR, and the CMC is 98 : 1 : 1, to produce a negative electrode active material mixture layer slurry.

### [Formation of Negative Electrode Active Material Mixture Layer]

The negative electrode active material mixture layer slurry produced using the above-described method is applied to both surfaces of a copper foil having a thickness of 8 µm as a negative electrode current collector by a die coater.

The negative electrode current collector to which the negative electrode active material mixture layer slurry is applied is dried, to remove the water in the negative electrode active material mixture layer slurry. As a result, the negative electrode active material mixture layer is formed. Then, the negative electrode active material mixture layer is compressed by being passed between paired press rollers, to obtain a negative electrode original plate.

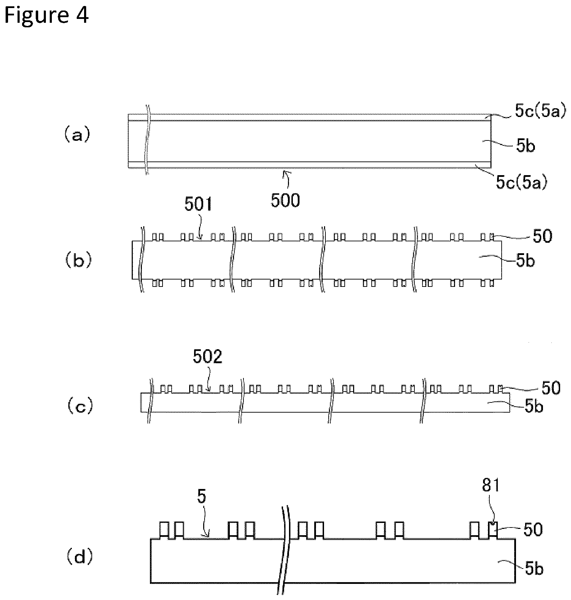

FIG. 4(a) is a plan view of the negative electrode original plate 500 produced using the above-described method. A negative electrode active material mixture layer 5b is formed in a longitudinal direction of a strip-shaped negative electrode current collector 5a on both surfaces of the negative electrode current collector 5a. Negative electrode current collector exposure parts 5c are respectively formed in a longitudinal direction of the negative electrode original plate 500 in both end portions in a width direction of the negative electrode original plate 500.

### [Formation of Tab]

FIG. 4(b) is a plan view of a negative electrode original plate 501 after tab formation. The negative electrode current collector exposure part 5c in the negative electrode original plate 501 after tab formation is cut into a predetermined shape, to produce the negative electrode original plate 501 after tab formation. The negative electrode original plate 500 can be cut by irradiation of an energy ray such as a laser, a metal mold, a cutter, or the like. In the negative electrode original plate 501 after tab formation, a plurality of negative electrode tabs 50 are formed at both ends in a width direction of the negative electrode original plate 501 after tab formation. Each of the negative electrode tabs 50 is composed of the negative electrode current collector exposure part 5c. The negative electrode original plate 500 is preferably cut by irradiation of an energy ray to form negative electrode tabs 50.

In each of some of the plurality of negative electrode tabs 50, an identification part 81 is formed. In the rectangular secondary battery 20, the identification part 81 is a notch portion formed at an outer peripheral edge of the negative electrode tab 50. The identification part 81 is preferably provided when the negative electrode tab 50 is formed. After the negative electrode tab 50 is formed, the identification part 81 may be formed in the negative electrode tab 50.

FIG. 4(c) is a plan view of a final negative electrode original plate 502. In a longitudinal direction of the negative electrode original plate 501 after tab formation, the negative electrode original plate 501 after tab formation is cut in a central portion in the width direction. As a result, the final negative electrode original plate 502 the size in a width direction of which is the size of the negative electrode plate 5 is obtained. That is, the final negative electrode original plate 502 remains in the state before it is cut to have the length of the negative electrode plate 5 in its length direction.

FIG. 4(d) is a plan view of the negative electrode plate 5. The final negative electrode original plate 502 is cut to have a predetermined length, to obtain the negative electrode plate 5. At this time, the final negative electrode original plate 502 is preferably cut at a position at a predetermined distance from the identification part 81 formed in each of some of the negative electrode tab 50 using the identification part 81 as a base point.

To further improve productivity, the final negative electrode original plate 502 is preferably cut in a process for producing a wound electrode assembly, described below. That is, a portion as a winding-end end portion is preferably cut while or after the wound electrode assembly is wound.

It is considered that a part of the final negative electrode original plate 502 is removed due to a partial defect or the like. In the case, when a portion as a winding-start end portion of the negative electrode plate 5 (a cut portion of the final negative electrode original plate 502) is specified after a part of the final negative electrode original plate 502 is removed, the identification part 81 provided in the negative electrode tab 50 is read so that the portion as the winding-start end portion of the negative electrode plate 5 can be specified, which can effectively prevent productivity from decreasing.

The one negative electrode plate 5 has a plurality of negative electrode tabs 50. Only some of the plurality of negative electrode tabs 50 are each provided with the identification part 81. That is, all the negative electrode tabs 50 are not each provided with the identification part 81.

### [Production of Wound Electrode Assembly]

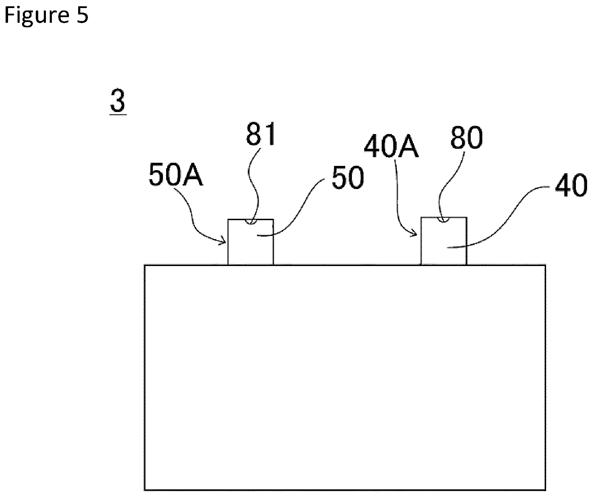

The positive electrode plate 4 and the negative electrode plate 5 produced using the above-described method are each wound via a strip-shaped separator, to manufacture the flat-shaped wound electrode assembly 3. As described above, one end of the final positive electrode original plate 402 and one end of the final negative electrode original plate 502 are fed to a winding device, and the final positive electrode original plate 402 and the final negative electrode original plate 502 are preferably cut at a predetermined position while or after the winding. FIG. 5 is a plan view of the wound electrode assembly 3. In the wound electrode assembly 3, a positive electrode tab group 40A composed of a plurality of positive electrode tabs 40 and a negative electrode tab group 50A composed of a plurality of negative electrode tabs 50 are provided in one end portion in a direction in which a winding axis extends.

In the wound electrode assembly 3, the identification part 80 is formed in the positive electrode tab 40 positioned on an outermost surface in a direction in which the positive electrode tabs 40 are laminated in the positive electrode tab group 40A. Accordingly, in the positive electrode tab group 40A, it is easily confirmed in which portion the identification part 80 is positioned.

In the wound electrode assembly 3, the identification part 81 is formed in the negative electrode tab 50 positioned on an outermost surface in a direction in which the negative electrode tabs 50 are laminated in the negative electrode tab group 50A. Accordingly, in the negative electrode tab group 50A, it is easily confirmed in which portion the identification part 81 is positioned.

The identification part 80 is preferably formed at a position closer to a winding-end end portion than to a winding-start end portion in a state where the wound electrode assembly 3 is formed in the longitudinal direction of the positive electrode plate 4. The identification part 81 is preferably formed at a position closer to the winding-end end portion than to the winding-start end portion in a state where the wound electrode assembly 3 is formed in a longitudinal direction of the negative electrode plate 5.

In the wound electrode assembly 3, when the number of positive electrode plates 4 to be laminated is set to N1 (layers), the number of positive electrode tabs 40 to be laminated is preferably 0.8 × N1 or more and more preferably 0.9 × N1 or more.

In the wound electrode assembly 3, when the number of negative electrode plates 5 to be laminated is set to N2 (layers), the number of negative electrode tabs 50 to be laminated is preferably 0.8 × N2 or more and more preferably 0.9 × N2 or more.

### [Connection between Current Collector and Tab]

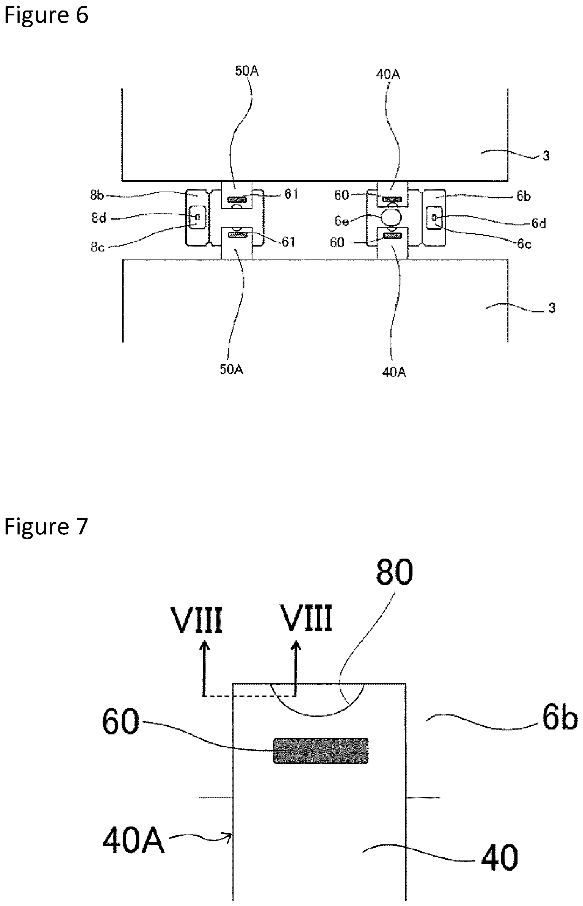

As illustrated in FIG. 6, respective positive electrode tab groups 40A in two wound electrode assemblies 3 are connected to a second positive electrode current collector 6b, and respective negative electrode tab groups 50A in two wound electrode assemblies 3 are connected to a second negative electrode current collector 8b. The positive electrode tab groups 40A are bonded to the second positive electrode current collector 6b, to respectively form bonding parts 60. The negative electrode tab groups 50A are bonded to the second negative electrode current collector 8b, to respectively form bonding parts 61. As a bonding method, ultrasound welding (ultrasound bonding), resistance welding, laser welding, or the like can be used.

A thin-walled part 6c is formed in the second positive electrode current collector 6b, and a current collector opening 6d is formed in the thin-walled part 6c. In the thin-walled part 6c, the second positive electrode current collector 6b is bonded to a first positive electrode current collector 6a. In the second positive electrode current collector 6b, a current collector through hole 6e is formed at a position opposing an electrolyte injection hole 15 in a sealing plate 2.

A thin-walled part 8c is formed in the second negative electrode current collector 8b, and a current collector opening 8d is formed in the thin-walled part 8c. In the thin-walled part 8c, the second negative electrode current collector 8b is bonded to a first negative electrode current collector 8a.

FIG. 7 is a plan view in the vicinity of a bonding portion between the positive electrode tab group 40A and the second positive electrode current collector 6b in FIG. 6. In the positive electrode tab group 40A composed of a plurality of laminated positive electrode tabs 40, an identification part 80 is formed in the positive electrode tab 40 positioned on an outermost surface in a direction in which the positive electrode tabs 40 are laminated. Accordingly, the identification part 80 can be reliably prevented from being arranged at a position where the bonding part 60 is formed. Particularly, when the identification part 80 is formed in the positive electrode tab 40 positioned on the outermost surface in the direction in which the positive electrode tabs 40 are laminated and on the opposite side to the side of the second positive electrode current collector 6b, the identification part 80 can be more reliably prevented from being arranged at the position where the bonding part 60 is formed. Accordingly, the strength of the bonding part 60 between the positive electrode tab group 40A and the second positive electrode current collector 6b can be effectively prevented from varying. Thus, a secondary battery having higher reliability is manufactured.

Even when the identification part 80 is formed in the positive electrode tab 40 positioned on an outermost surface on the side of the second positive electrode current collector 6b in the direction in which the positive electrode tabs 40 are laminated, a position of the identification part 80 can be confirmed before the positive electrode tab group 40A is arranged on the second positive electrode current collector 6b.

In the positive electrode tab group 40A, the plurality of positive electrodes 40 are difficult to laminate without any deviation. As a result, if the identification part 80 is provided in the positive electrode tab 40 positioned in a central portion in the direction in which the positive electrode tabs 40 are laminated, a position of the identification part 80 is difficult to accurately grasp. Accordingly, in some cases, the bonding part 60 is formed in a portion where the identification part 80 is formed so that the reliability of a connection portion between the positive electrode tab group 40A and the second positive electrode current collector 6b may decrease. To solve such a problem, the positive electrode tab 40 positioned on the outermost surface in the direction in which the positive electrode tabs 40 in the positive electrode tab group 40A are laminated is preferably provided with the identification part 80. Further, the positive electrode tab 40 positioned on the outermost surface on the opposite side to the side of the second positive electrode current collector 6b in the positive electrode tab group 40A is preferably provided with the identification part 80.

A position where the identification part 80 is formed in the positive electrode tab 40 is preferably provided on the side closer to a distal end of the positive electrode tab 40 than the bonding part 60 in a direction in which the positive electrode tab 40 protrudes from a main body portion of the positive electrode plate 4 (a region where the positive electrode active material mixture layer 4b is formed). As a result, when the positive electrode tab group 40A and the second positive electrode current collector 6b are bonded to each other, even if the positive electrode tab 40 is broken and damaged with the identification part 80 used as a base point, conductivity can be prevented from decreasing from the main body portion of the positive electrode plate 4 to the second positive electrode current collector 6b. Such an effect is also obtained when the positive electrode tab 40 positioned in a central portion in the lamination direction in the positive electrode tab group 40A is provided with the identification part 80.

If the positive electrode tab group 40A and the second positive electrode current collector 6b are ultrasonically welded to each other, the positive electrode tab group 40A and the second positive electrode current collector 6b are sandwiched between an anvil and a horn, and the horn is vibrated to perform ultrasonic welding. In this case, the horn is preferably vibrated in a width direction of the positive electrode tab 40 (in a left-right direction in FIG. 7). In such a case, when the identification part 80 is formed on the side closer to the distal end of the positive electrode tab 40 (an upper end in FIG. 7) than a portion as the bonding part 60, the positive electrode tab 40 can be effectively prevented from being broken and damaged. That is, the positive electrode tab 40 can be effectively prevented from being broken and damaged by vibration at the time of ultrasonic welding.

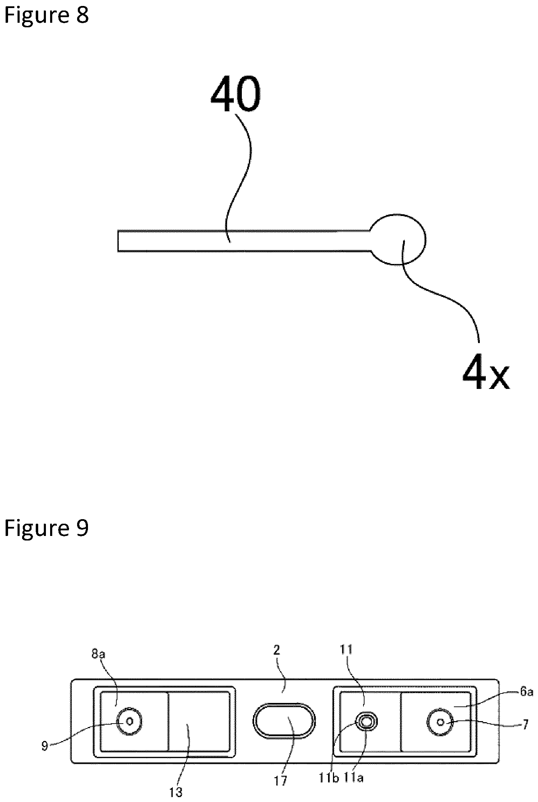

FIG. 8 is a cross-sectional view of the positive electrode tab 40 taken along a line VIII - VIII illustrated in FIG. 7. A thick-walled part 4x having a thickness larger than the thickness of a central portion of the positive electrode tab 40 is formed in an edge portion of a notch as the identification part 80 provided in the positive electrode tab 40. When the thick-walled part 4x is formed, the positive electrode tab 40 can be effectively prevented from being broken and damaged with the identification part 80 used as a base point. The thickness of the thick-walled part 4x is preferably 1.1 times or more and more preferably 1.2 times or more the thickness of the central portion of the positive electrode tab 40.

A configuration and its effect described in relation to the positive electrode tab group 40A are similar to those in relation to the negative electrode tab group 50A. Although a case where the identification part is a notch has been described, the same applies to a case where the identification part is an opening. If productivity and reliability are considered, the identification part is preferably a notch rather than an opening.

### [Attachment of Each Component to Sealing Plate]

FIG. 9 is a diagram illustrating a surface, on the inner side of the battery, of the sealing plate 2 to which each of components is attached. Each of the components is attached to the sealing plate 2 in the following manner.

The outer-side insulating member 10 is arranged on the outer surface side of the battery around the positive electrode terminal insertion hole 2a of the sealing plate 2. The inner-side insulating member 11 and the first positive electrode current collector 6a are arranged on the inner surface side of the battery around the positive electrode terminal insertion hole 2a of the sealing plate 2. The positive electrode terminal 7 is inserted into a through hole of the outer-side insulating member 10, the positive electrode terminal insertion hole 2a of the sealing plate 2, a through hole of the inner-side insulating member 11, and a through hole of the first positive electrode current collector 6a, to caulk a distal end of the positive electrode terminal 7 onto the first positive electrode current collector 6a. As a result, the positive electrode terminal 7 and the first positive electrode current collector 6a are fixed to the sealing plate 2. A portion caulked in the positive electrode terminal 7 and the first positive electrode current collector 6a are preferably welded to each other.

The outer-side insulating member 12 is arranged on the outer surface side of the battery around the negative electrode terminal insertion hole 2b of the sealing plate 2. The inner-side insulating member 13 and the first negative electrode current collector 8a are arranged on the inner surface side of the battery around the negative electrode terminal insertion hole 2b of the sealing plate 2. The negative electrode terminal 9 is inserted into a through hole of the outer-side insulating member 12, the negative electrode terminal insertion hole 2b of the sealing plate 2, a through hole of the inner-side insulating member 13, and a through hole of the first negative electrode current collector 8a, to caulk a distal end of the negative electrode terminal 9 onto the first negative electrode current collector 8a. As a result, the negative electrode terminal 9 and the first negative electrode current collector 8a are fixed to the sealing plate 2. A portion caulked in the negative electrode terminal 9 and the first negative electrode current collector 8a are preferably welded to each other.

In the inner-side insulating member 11, a portion opposing the electrolyte injection hole 15 provided in the sealing plate 2 is provided with an injection opening 11a. An edge portion of the injection opening 11a is provided with a cylindrical part 11b.

### [Connection between First Current Collector and Second Current Collector]

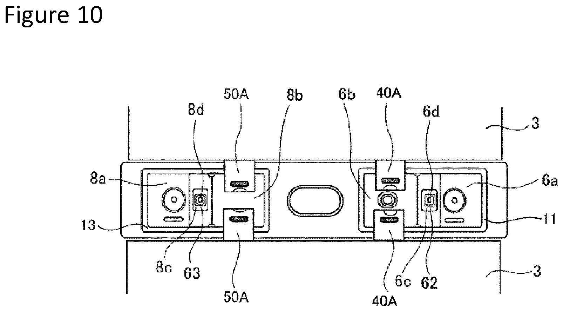

FIG. 10 is a diagram illustrating a surface, on the inner side of the battery, of the sealing plate 2 after the second positive electrode current collector 6b is attached to the first positive electrode current collector 6a and the second negative electrode current collector 8b is attached to the first negative electrode current collector 8a.

The second positive electrode current collector 6b to which the positive electrode tab group 40A is connected is arranged on the inner-side insulating member 11 such that its part overlaps the first positive electrode current collector 6a. The thin-walled part 6c is irradiated with a laser, to bond the second positive electrode current collector 6b and the first positive electrode current collector 6a to each other. As a result, a bonding part 62 is formed. The second negative electrode current collector 8b to which the negative electrode tab group 50A is connected is arranged on the inner-side insulating member 13 such that its part overlaps the first negative electrode current collector 8a. The thin-walled part 8c is irradiated with a laser, to bond the second negative electrode current collector 8b and the first negative electrode current collector 8a to each other. As a result, a bonding part 63 is formed.

### [Production of Secondary Battery]

The two positive electrode tab groups 40A and the two negative electrode tab groups 50A are bent such that an upper surface of the one wound electrode assembly 3 and an upper surface of the other wound electrode assembly 3 in FIG. 10 contact each other directly or via another member. As a result, the two wound electrode assemblies 3 are integrated. The two wound electrode assemblies 3 are arranged within the electrode assembly holder 14 composed of an insulating sheet molded in a box shape or a bag shape.

The one positive electrode tab group 40A and the other positive electrode tab group 40A enter a state where they are respectively bent in different directions. The one negative electrode tab group 50A and the other negative electrode tab group 50A enter a state where they are respectively bent in different directions.

The two wound electrode assemblies 3 wrapped by the electrode assembly holder 14 are inserted into the rectangular exterior member 1. The sealing plate 2 and the rectangular exterior member 1 are welded to each other, and the opening of the rectangular exterior member 1 is sealed with the sealing plate 2. An electrolyte is injected into the rectangular exterior member 1 via the electrolyte injection hole 15 provided in the sealing plate 2. Then, the electrolyte injection hole 15 is sealed with the sealing member 16 such as a blind rivet. As a result, the rectangular secondary battery 20 is completed.

### <Others>

Although an example in which the two wound electrode assemblies are arranged in the battery case has been illustrated in the above-described embodiment, the number of wound electrode assemblies may be one, or may be three or more.

Although an example in which both the positive electrode tab and the negative electrode tab are each provided with the identification part has been illustrated in the above-described embodiment, only one of them may be provided with the identification part.

Although an example in which each of the positive electrode current collector and the negative electrode current collector is composed of two components has been illustrated in the above-described embodiment, each of the positive electrode current collector and the negative electrode current collector may be composed of one component. If each of the positive electrode current collector and the negative electrode current collector is composed of one component, the positive electrode current collector and the negative electrode current collector are preferably respectively connected to the positive electrode terminal and the negative electrode terminal attached to the sealing plate after the positive electrode tab group and the negative electrode tab group are respectively connected to the positive electrode current collector and the negative electrode current collector. A conductive path between a positive electrode plate and a positive electrode terminal may also be provided with a current cut-off mechanism.

Although an example in which the tab is provided with the notch as the identification part has been illustrated in the above-described embodiment, the present invention is not limited to this. The identification part may be an opening formed in the tab. A mark may be formed in the tab as the identification part. As a method of forming the mark, printing, application of a paint, a laser marker, or the like can be used. Another component such as a tape can also be connected to the tab and is set as the identification part.

It is also considered that some of a plurality of tabs each have a notch, an opening, or the like formed therein and a portion having no notch, opening, or the like formed therein is set as an identification part. Such a case is less preferable because the number of tabs each provided with an identification part may increase, leading to decreased productivity.

Known materials can be respectively used for the positive electrode plate, the negative electrode plate, the separator, the electrolyte, and the like.

### REFERENCE SIGNS LIST

20 Rectangular secondary battery
1 Rectangular exterior member
2 Sealing plate
2a Positive electrode terminal insertion hole
2b Negative electrode terminal insertion hole
100 Battery case
3 Wound electrode assembly
4 Positive Electrode Plate
4a Positive electrode current collector
4b Positive electrode active material mixture layer
4c Positive electrode protective layer
4e Positive electrode current collector exposure part
4x Thick-walled part
40 Positive electrode tab
40A Positive electrode tab group
400 Positive electrode original plate
401 Positive electrode original plate after tab formation
402 Final positive electrode original plate
5 Negative electrode plate
5a Negative electrode current collector
5b Negative electrode active material mixture layer
5c Negative electrode current collector exposure part
50 Negative electrode tab
50A Negative electrode tab group
500 Negative electrode original plate
501 Negative electrode original plate after tab formation
502 Final negative electrode original plate
6a First positive electrode current collector
6b Second positive electrode current collector
6c Thin-walled part
6d Current collector opening
6e Current collector through hole
7 Positive electrode terminal
8a First negative electrode current collector
8b Second negative electrode current collector
8c Thin-walled part
8d Current collector opening
9 Negative electrode terminal
10 Outer-side insulating member
11 Inner-side insulating member
11a Injection opening
11b Cylindrical part
12 Outer-side insulating member
13 Inner-side insulating member
14 Electrode assembly holder
15 Electrolyte injection hole
16 Sealing member
17 Gas discharge valve
60, 61, 62, 63 Bonding part
80, 81 Identification part

## Claims

1. A secondary battery comprising:
a strip-shaped first electrode plate having a plurality of first electrode tabs;
a strip-shaped second electrode plate having a plurality of second electrode tabs;
a flat-shaped wound electrode assembly obtained by winding the first electrode plate and the second electrode plate via a strip-shaped separator; and
a current collector connected with the plurality of first electrode tabs in a laminated state,
wherein an identification part is formed in each of some of the plurality of first electrode tabs.

2. The secondary battery according to claim 1, wherein in a longitudinal direction of the first electrode plate, the first electrode tab in which the identification part is formed is arranged at a position closer to a winding-end end portion of the first electrode plate than to a winding-start end portion of the first electrode plate.

3. The secondary battery according to claim 1 or 2, wherein the identification part is a notch, an opening, or a mark formed in the first electrode tab.

4. The secondary battery according to claim 3, wherein
the identification part is an opening or a notch formed in the first electrode tab, and
the thickness of the first electrode tab in an edge portion of the opening or the notch is larger than the thickness of the first electrode tab on the side closer to a center of the first electrode tab than the edge portion of the first electrode tab.

5. The secondary battery according to any one of claims 1 to 4, wherein the identification part is formed in the first electrode tab positioned on an outermost surface in a direction in which the first electrode tabs are laminated among the plurality of laminated first electrode tabs.

6. The secondary battery according to claim 5, wherein the identification part is formed in the first electrode tab arranged on an outermost surface of the plurality of laminated first electrode tabs and on the opposite side to the side of the current collector.

7. The secondary battery according to any one of claims 1 to 6, further comprising:
a bonding part in which the plurality of first electrode tabs and the current collector are bonded to each other,
wherein the identification part is formed on the side closer to a distal end of the first electrode tab than the bonding part in a direction in which the first electrode tab protrudes.

8. A method of manufacturing a secondary battery comprising:
a strip-shaped first electrode plate having a plurality of first electrode tabs,
a strip-shaped second electrode plate having a plurality of second electrode tabs,
a flat-shaped wound electrode assembly obtained by winding the first electrode plate and the second electrode plate via a strip-shaped separator, and
a current collector connected with the plurality of first electrode tabs in a laminated state, the method of manufacturing the secondary battery having:
an original plate production step for producing a first electrode original plate having the plurality of first electrode tabs and forming an identification part in each of some of the plurality of first electrode tabs;
an electrode plate production step for cutting the first electrode original plate to produce the first electrode plate after the original plate production step; and
a connection step for laminating the plurality of first electrode tabs and connecting the laminated first electrode tabs to a current collector.

9. The method of manufacturing the secondary battery according to claim 8, wherein
the identification part is an opening or a notch formed in the first electrode tab,
the plurality of first electrode tabs and the current collector are bonded to each other by ultrasonic bonding to form a bonding part in the connection step, and
the identification part is arranged on the side closer to a distal end of the first electrode tab than the bonding part.

10. The method of manufacturing the secondary battery according to claim 9, wherein in the connection step, the plurality of first electrode tabs and the current collector are sandwiched between an anvil and a horn to vibrate the horn in a width direction of the first electrode tab, to perform ultrasonic bonding.
